(19) Europäisches Patentamt

European Patent Office

Office européen des brevets

(11) Veröffentlichungsnummer: **0 307 703**

**A1**

## (12) EUROPÄISCHE PATENTANMELDUNG

(21) Anmeldenummer: **88114059.4**

(22) Anmeldetag: **29.08.88**

(51) Int. Cl.4: **H01F 5/04 , H02K 3/52 , H02K 5/22**

(30) Priorität: **11.09.87 DE 3730606**

(43) Veröffentlichungstag der Anmeldung:
**22.03.89 Patentblatt 89/12**

(84) Benannte Vertragsstaaten:
**CH DE FR IT LI SE**

(71) Anmelder: **Siemens Aktiengesellschaft Berlin und München**
**Wittelsbacherplatz 2**
**D-8000 München 2(DE)**

Anmelder: **HOHENLOHER SPULENKÖRPERFABRIK**
**Karlsvorstadt 44**
**D-7110 Öhringen(DE)**

(72) Erfinder: **Renkl, Klaus, Dipl.-Ing.**
**An der oberen Mühle 10**
**D-8702 Kürnach(DE)**
Erfinder: **Pieper, Wolfgang**
**Kirchbühlstrasse 4**
**D-8700 Würzburg(DE)**
Erfinder: **Ahrens, Peter**
**Beethovenstrasse 8**
**D-7114 Pfedelbach(DE)**

(74) Vertreter: **Mehl, Ernst, Dipl.-Ing. et al**
**Postfach 22 13 17**
**D-8000 München 22(DE)**

(54) **Spulenkörper.**

(57) Es soll ein Spulenkörper geschaffen werden, der mit einfachen Mitteln eine automatengerecht herstellbare zugentlastete Verbindung zwischen den Wicklungsenden einer auf den Spulenkörper maschinell gewickelten Erregerwicklung und einem mit einer äußeren Anschlußleitung verbundenen Miniaturstekker ermöglicht, der auf die äußeren Stiftenden (71,81,91) von Anschlußstiften 7,8,9 aufsteckbar ist, die in eine an den Stirnflanschen verrastbare Anschlußplatte (4,5,6) eingespritzt sind und deren innere Stiftenden (72,82,92) mit den Spulenwicklungsenden kontaktiert sind; wird vorgeschlagen, die äußeren Stiftenden (71,81,91) gegenüber den inneren Stiftenden (72,82,92) durch ein abwinkelndes Zwischenstück (73,83,93) derart versetzt in die Anschlußplatte (4,5,6) einzuspritzen, daß die äußeren Stiftenden (71,81,91) mit möglichst dichtem gegenseitigem Abstand vorzugsweise in Reihe nebeneinander und die inneren Stiftenden (72,82,92) mit möglichst großem gegenseitigem Abstand vorzugsweise nicht fluchtend zueinander gehalten sind.

FIG 3

FIG 2

FIG 1

## Spulenkörper

Die Erfindung bezieht sich auf einen Spulenkörper gemäß Oberbegriff des Anspruches 1; ein derartiger Spulenkörper ist aus der DE-PS 27 58 700 bekannt.

Bei dem durch die DE-PS 27 58 700 bekannten Spulenkörper sind in die einstückig über ein Filmscharnier an den einen Stirnflansch des Spulenkörpers angeformte Anschlußplatte in Reihe hintereinander Anschlußstifte eingegossen, die mit ihren jeweils fluchtenden äußeren und inneren Stiftenden in der Gebrauchsstellung der Anschlußplatte aus dieser radial nach außen bzw. innen herausragen; die Anschlußplatte ist zur Bewicklung des Spulenkörpers bzw. zum Anschluß der Spulenwicklungsenden an die inneren Stiftenden seitlich von dem Spulenkörper wegklappbar und anschließend in ihre Gebrauchsstellung mit den angeschlossenen Spulenwicklungsenden über den Wickelraum umklappbar und am anderen Stirnflansch des Spulenkörpers durch Verrastung fixierbar.

Durch die DE-OS 34 35 887 ist ein Spulenkörper mit an dem einen Stirnflansch über ein Filmscharnier angeformter und nach dem Bewickeln über den Wickelraum überschwenkbarer sowie am anderen Stirnflansch verrastbarer Anschlußplatte bekannt, bei dem die Anschlußstifte nicht eingegossen, sondern in Paßöffnungen der Anschlußplatte eingesteckt sind. Zur insbesondere zugentlasteten Halterung der in die Paßöffnungen der Anschlußplatte eingesteckten Anschlußstifte sind jeweils die inneren Stiftenden mit den äußeren Stiftenden über ein abwinkelndes Zwischenstück verbunden, das an der betriebsmäßigen Außenseite der Anschlußplatte quer zu deren Oberfläche zur Anlage kommt.

Gemäß Aufgabe vorliegender Erfindung soll ein Spulenkörper geschaffen werden, der mit einfachen Mitteln eine automatengerecht herstellbare zugentlastete Verbindung zwischen den Wicklungsenden einer auf den Spulenkörper maschinell gewickelten Erregerwicklung und den in der Kunststoff-Anschlußplatte im Rastermaß eines mit einer äußeren Anschlußleitung verbundenen Miniatursteckers oder Vielfach-Bandkabels gehalterten Anschlußstiften ermöglicht.

Die Lösung dieser Aufgabe gelingt bei einem Spulenkörper der eingangs genannten Art erfindungsgemäß durch die Lehre des Anspruches 1; vorteilhafte Ausgestaltungen der Erfindung sind jeweils Gegenstand der Unteransprüche.

Die erfindungsgemäße Spulenkörperkonstruktion gewährleistet unter weitestgehender Verwendung von Einheits-Anschlußstift-Bauteilen durch die eingegossenen abgewinkelten Zwischenstücke sowohl eine gesicherte Zugentlastung als auch bei der gegenseitig verdrehten Lage der in der Anschlußplatte gehaltenen Anschlußstifte eine vorteilhafte Abstandsweite und somit gute Zugänglichkeit der inneren Stiftenden für die von einem Fadenführer maschinell zugebrachten und zu kontaktierenden Wicklungsenden einerseits und ein möglichst enges gebrauchssteckerkonformes Rastermaß der äußeren Stiftenden andererseits.

Wird nach einer ersten Ausgestaltung der Erfindung die Anschlußplatte über ein Filmscharnier an einem der Stirnflansche einstückig derart angeformt, daß sie zur Kontaktierung mit den Wicklungsenden der Erregerspule von dem Wickelraum seitlich wegschwenkbar und dann mit den kontaktierten Wicklungsenden in ihre Gebrauchsstellung auf den anderen Stirnflansch zuschwenkbar und an diesem festrastbar ist, so ergibt sich durch die Fixierung des Spulenkörpers relativ zum Fadenführer einer maschinellen Wickelvorrichtung gleichzeitig die richtige Zuordnung der Anschlußstifte zu den aus dem Spulenkörper herausgeführten Wicklungsenden der Erregerspule, wobei in der Anschlußplatte zwischen dem Scharniergelenk und den inneren Stiftenden der Anschlußstifte gehaltene Abspannhaken die Spulenwicklungsenden so straff führen können, daß sich beim Zurückschwenken der Anschlußplatte in ihre Gebrauchsstellung eine Schlaufenbildung und damit Beschädigung der Spulenwicklungsenden oder ihre unerwünschte gegenseitige Kontaktierung vorteilhaft vermeiden lassen.

Wird dagegen nach einer weiteren Ausgestaltung der Erfindung die Anschlußplatte als getrenntes Bauteil derart ausgebildet, daß sie zur Kontaktierung mit den Wicklungsenden der Erregerspule neben dem Wickelraum seitlich positionierbar und dann mit den kontaktierten Wicklungsenden über den Wickelraum legbar und in die Gebrauchsstellung an beiden Stirnflanschen festrastbar ist, so vereinfacht sich dadurch die Gußform für den eigentlichen Spulenkörper, da die Anschlußplatte als gesondertes Bauteil unabhängig von dem Spulenkörper spritzbar ist.

Anstelle einer Fixierung der Anschlußplatte in ihrer Gebrauchsstellung durch Rastmittel kann in vorteilhafter Weise auch ein Festschweißen, z.B. Laserschweißen, oder ein Festkleben vorgesehen werden.

Die Erfindung sowie weitere vorteilhafte Ausgestaltungen der Erfindung werden im folgenden anhand schematisch dargestellter Ausführungsbeispiele in der Zeichnung näher erläutert; darin zeigen:

FIG 1 in einem axialen Längsschnitt einen ersten Spulenkörper mit in Spritzstellung gezeigter, einstückig angeformter Anschlußplatte;

FIG 2 den Spulenkörper gemäß FIG 1 in Ansicht II;

FIG 3 den Spulenkörper gemäß FIG 1 in Ansicht III;

FIG 4 in vergrößerter Detaildarstellung die Anschlußplatte des Spulenkörpers gemäß FIG 1-3;

FIG 5 in einem axialen Längsschnitt einen zweiten Spulenkörper mit in Wickelstellung gezeigter, einstückig angeformter Anschlußplatte;

FIG 6 den Spulenkörper gemäß FIG 5 in Ansicht VI;

FIG 7 den Spulenkörper gemäß FIG 5 in Ansicht VII;

FIG 8 in vergrößerter Detaildarstellung die Anschlußplatte des Spulenkörpers gemäß FIG 5;

FIG 9 eine als getrenntes Bauteil gefertigte mittels Rasthaken an dem Stirnflansch des Spulenkörpers fixierbare Anschlußplatte;

FIG 10 die der Anschlußplatte gemäß FIG 9 zugeordneten Stirnflansche;

FIG 11 eine als getrenntes Bauteil gefertigte und an stirnflanschseitigen Rasthaken fixierte Anschlußplatte;

FIG 12 eine in einen Axialschlitz eines Motorgehäuses eingeschobene Anschlußplatte.

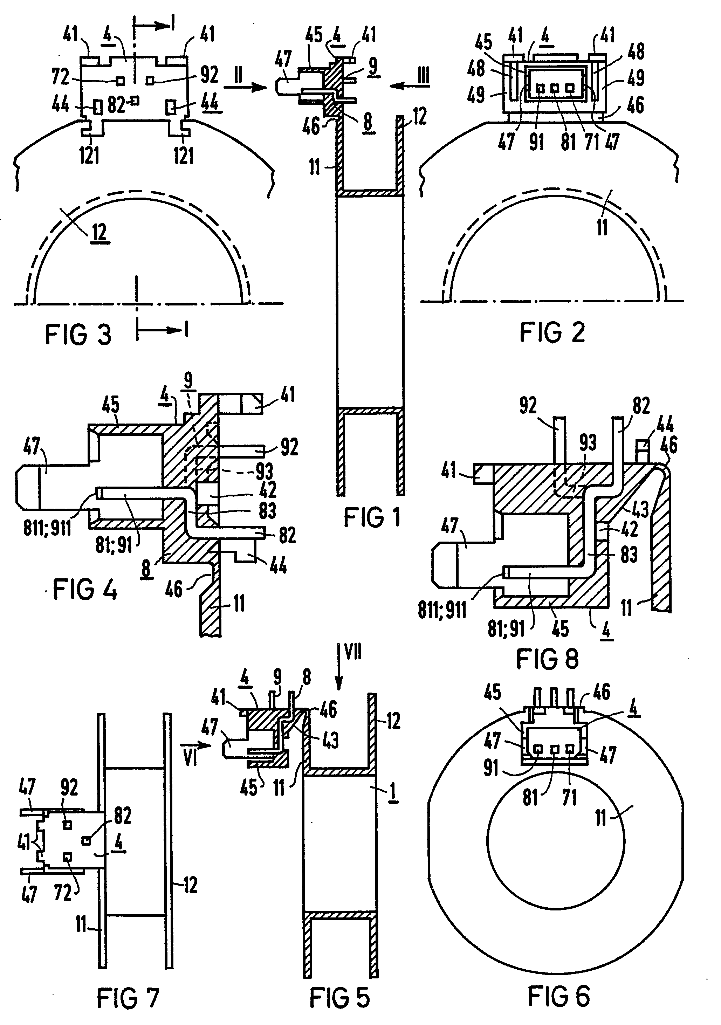

FIG 1 zeigt in einem axialen Längsschnitt einen Spulenkörper 1, in dessen Wickelraum zwischen den beiden Stirnflanschen 11,12 eine hier nicht dargestellte Erregerspule maschinell einzuwickeln ist. An den äußeren Rand des einen Stirnflansches 11 ist über ein Filmscharnier 46 eine Anschlußplatte 4 einstückig angegossen, die in FIG 1-4 in ihrer sogenannten Spritzstellung dargestellt ist. In dieser Spritzstellung wird der Spulenkörper mit einstückig angeformter Anschlußplatte aus der Spritzgußform entnommen. Durch weiteres Schwenken um 90° im Gegenuhrzeigersinn wird die Wickelstellung und im Uhrzeigersinn die Gebrauchsstellung erreicht.

In die Anschlußplatte 4 sind drei, aus einem Vierkantdraht geformte Anschlußstifte 7,8,9 mit äußeren Stiftenden 71,81,91 sowie inneren Stiftenden 72,82,92 derart eingegossen, daß sie einerseits gemäß FIG 2 aus der Oberseite der Anschlußplatte 4 gemäß FIG 2 in Reihe hintereinander, in dichtestmöglichem Abstand entsprechend dem Rastermaß eines außen aufzusteckenden Miniatursteckers oder eines außen zu kontaktierenden Flachbandkabels und andererseits gemäß FIG 3 aus der Unterseite der Anschlußplatte 4 in weitestgehendem gegenseitigen Abstand in Dreiecksanordnung herausragen.

Nach dem Einwickeln der Erregerspule in den Wickelraum zwischen den Stirnflanschen 11,12 und dem Umwickeln bzw. Kontaktieren der inneren Stiftenden an der Unterseite der Anschlußplatte 4 wird diese aus ihrer Wickelstellung, d.h. aus einer gegenüber der dargestellten Spritzstellung um 90° gegen den Uhrzeigersinn geschwenkten Stellung über den Wickelraum umgelegt und am anderen Stirnflansch 12 in ihrer Gebrauchsstellung durch Verrastung fixiert; dazu dienen an der Anschlußplatte 4 einstückig angeformte Rastnasen 41,41, die in korrespondierende Rastöffnungen 121,121 im Stirnflansch 12 einrasten.

Wie insbes. aus FIG 4 ersichtlich, bestehen die Anschlußstifte 7,8,9 jeweils aus einem äußeren Stiftende 71,81,91, die fluchtend in Reihe im Rastermaß eines Miniatursteckers angeordnet sind, und aus einem inneren Stiftende 72,82,92, die durch ein abwinkelndes Zwischenstück 73,83,93 derart versetzt gegenüber ihren jeweiligen äußeren Stiftenden 71,81,91 in die Anschlußplatte 4 eingegossen sind, daß sie einen für die Zugänglichkeit des Fadenführers eines Wickelautomaten vorteilhaften gegenseitig großen Abstand aufweisen; der gegenseitig vorteilhafte Dreiecksabstand ist aus FIG 3 ersichtlich.

An die Oberseite der Anschlußplatte 4 ist einstückig eine Steckerwanne 45 angegossen, die die äußeren Stiftenden 71,81,91 einerseits als Schutzkappe umgibt und andererseit als Einführ- und Fixierhilfe für einen auf die äußeren Stiftenden aufsteckbaren Miniaturstecker dient. Als weitere Einführhilfe sind an beiden Längsseiten der Steckerwanne 45 noch zusätzliche in Steckrichtung vorstehende Führungslaschen 47 angeformt. Zur sicheren Kontaktierung des Miniatursteckers mit den äußeren Stiftenden dienen weiterhin an die Auslaufenden der Stiftenden 71,81,91 angeprägte Anschrägungen 711,811 911. Eine Formöffnung 42 an der Unterseite der Anschlußplatte 4 im Bereich des Überganges zwischen den jeweiligen äußeren Stiftenden und dem anschließenden Zwischenstück dient in vorteilhafter Weise zur Zuführung eines Stützmittels der Anschlußstifte beim Eingießen in die Anschlußplatte 4 innerhalb der Spritzgußform.

Zur Gewährleistung einer schlaufenfreien Führung der von der Erregerspule im Wickelraum zwischen den Stirnflanschen 11,12 wegführenden Spulenwicklungsenden zu den inneren Stiftenden 72,82,92 beim Umklappen der Anschlußklappe 4 aus ihrer Wickelstellung in ihre Gebrauchsstellung dienen an die Unterseite der Anschlußplatte 4 zusätzlich einstückig angeformte Abspannhaken 44,44, um welche die Spulenwicklungsenden im Zuge ihres Verlaufs zu den inneren Stiftenden 72,82,92 vorzugsweise straff gehalten werden. Die Abspannhaken 44,44 liegen dazu zweckmäßigerweise in der Nähe des Filmscharniers 46 und somit der Schwenkachse der Anschlußplatte 4 sowie beidseitig außerhalb der Lage der inneren Anschlußenden 72,82,92 der Anschlußstifte 7,8,9.

Wie insbes. aus FIG 2 ersichtlich, sind an die Seitenkante der Anschlußplatte 4 aus der Zeichenebne hervorragende Seitenführungskanten 48 mit einstückig mitangeformt, die sich mit ihren Außenkanten gegen die Ränder eines stirnseitig offenen Axialschlitzes eines rohr- bzw. topfförmigen Motorgehäuses anlegen, in den die Spule eingesteckt wird; dabei wird die durch den Schlitz nach radial außen ragende Anschlußplatte 4 gleichzeitig als isolierte Durchführung durch das Motorgehäuse mitbenutzt. Die seitlich außerhalb der Seitenführungskanten 48 vorgesehenen Unterlegkanten 49 greifen bei dem Einschieben des Spulenkörpers in das Motorgehäuse unter dessen innere Gehäusewandung, so daß eine zusätzliche mechanische Lagesicherungshilfe beim Aufdrücken bzw. beim Abziehen des Steckers von den äußeren Stiftenden gegeben ist.

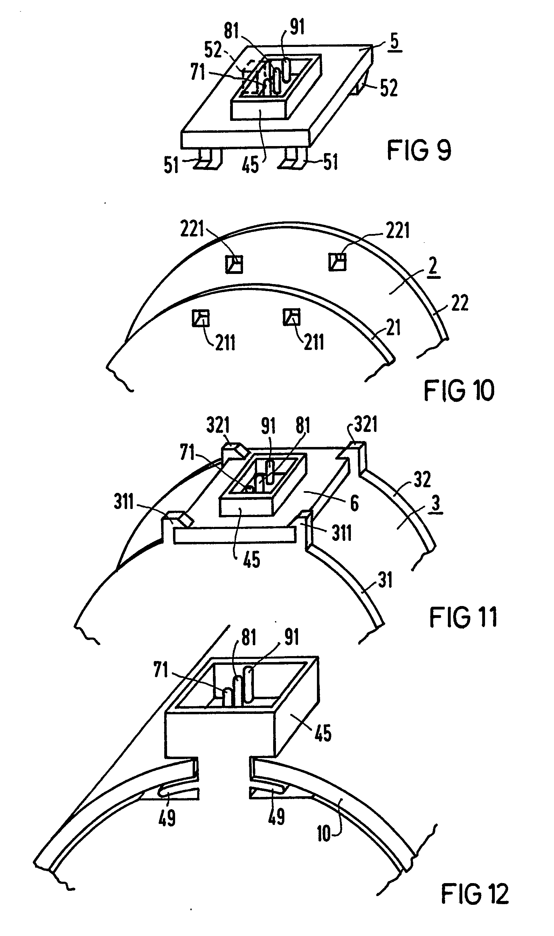

Während FIG 1-4 eine erste Ausgestaltung eines erfindungsgemäßen Spulenkörpers zeigt, bei der in Gebrauchsstellung der Anschlußplatte die äußeren Stiftenden 71,81,91 senkrecht zur Spulenachsrichtung aus der Anschlußplatte herausragen, zeigen FIG 5-8 bei ansonsten im wesentlichen äquivalenten Bauteilen insofern eine andere Ausgestaltung des erfindungsgemäßen Spulenkörpers, als jeweils in Wickelstellung der Anschlußplatte die äußeren Stiftenden 71,81,91 in Spulenachsrichtung sowie die inneren Stiftenden 72,82,92 senkrecht zur Spulenachsrichtung und in Gebrauchsstellung der Anschlußplatte die äußeren Stiftenden 71,81,91 in Gegenrichtung zur Wickelstellung parallel zur Spulenachsrichtung sowie die inneren Stiftenden 72,82,92 in Gegenrichtung zur Wickelstellung senkrecht zur Spulenachsrichtung aus der Anschlußplatte herausragen. Dazu sind gemäß FIG 8 in dem dargestellten Ausführungsbeispiel die äußeren Stiftenden der Anschlußplatte durch ein zweifach abwinkelndes Zwischenstück mit den inneren Stiftenden der Anschlußstifte verbunden; die Anschlußplatte ist in beiden Ausführungsbeispielen jeweils um einen Winkel von 180° von der Wickel- zur Gebrauchsstellung zu schwenken.

Zur axialen Abstützung der Anschlußplatte 4 bei gemäß FIG 5-8 in Spulenachsrichtung axial auf die äußeren Stiftenden aufzusteckenden, mit den äußeren Anschlußleitungen zu verbindenden Miniatursteckers sind in vorteilhafter Weise an die Anschlußplatte 4 Stützrippen 43 angeformt, mittels derer der axiale Aufsteckdruck von der Anschlußplatte 4 in den Stirnflansch 11 abgelenkt werden kann.

FIG 9,10 zeigen eine erste Ausführung einer als getrenntes Bauteil gespritzten Anschlußplatte 5 mit einstückig angeformten ersten Rastnasen 51 und zweiten Rastnasen 52 die in zugeordnete Rastöffnungen 211,211 bzw. 221,221 der Stirnflansche 21 bzw. 22 eines Spulenkörpers 2 mit den an den Anschlußstiften 7,8,9 angeschlossenen Spulenwicklungsenden in der Gebrauchsstellung der Anschlußplatte 5 einrasten.

Alternativ zu dem Spulenkörper gemäß FIG 9,10 zeigt FIG 11 eine weitere Ausgestaltung des erfindungsgemäßen Spulenkörpers, bei dem eine als getrenntes Bauteil gefertigte Anschlußplatte 6 nach dem Kontaktieren der Anschlußstifte 7,8,9 mit ihren äußeren Stiftenden 71,81,91 mit den Spulenwicklungsenden an den Stirnflanschen 31,32 eines Spulenkörpers 3 mittels direkt an den Rand der Stirnflansche 31 bzw. 32 angegossener Rasthaken 311,311 bzw. 321,321 fixiert ist.

FIG 12 zeigt eine mit radialen Hinterschneidungen versehene, in einen stirnseitig offenen Gehäuseschlitz eines Motorgehäuses 10 eingeführte Anschlußplatte, bei der ein in tangentialer Richtung radial außen das Motorgehäuse 10 überragender Teil der Anschlußplatte gleichzeitig als Abstützungshilfe der Anschlußplatte am Motorgehäuse 10 beim senkrecht zur Spulenachsrichtung aufzudrückenden Anschlußstecker und eine lappenförmige Unterlegkante 49 als eine den radialen Zug aufnehmende Lagesicherungshilfe beim Abziehen des Anschlußsteckers dienen kann; gleichzeitig wird durch die Unterlegkante 49 in vorteilhafter Weise die Isolationsstrecke zwischen dem Motorgehäuse 10 und den Wicklungsdrähten in dem Spulenkörper vergrößert.

## Ansprüche

1. Spulenkörper (1 bzw.2 bzw.3) mit U-förmigem, nach radial außen geöffentem, axial durch Stirnflansche (11,12 bzw.21,22 bzw.31,32) begrenztem Wickelraum für eine Erregerspule sowie mit einer über den Wickelraum aus einer seitlichen Wickelstellung in ihre Gebrauchsstellung legbaren Kunststoff-Anschlußplatte (4 bzw.5 bzw.6) mit darin eingegossenen einstückigen Anschluß-Stiften (7 bzw.8 bzw.9) mit aus der Anschlußplatte nach radial außen herausragenden äußeren Stiftenden (71 bzw.81 bzw.91) für äußere Anschlußleitungen und nach radial innen herausragenden inneren Stiftenden (72 bzw.82 bzw.92) für die Wicklungsenden der Erregerspule, welche Anschlußplatte zunächst zur freien Bewickelbarkeit des Spulenkörpers sowie zur Kontaktierung mit den Wicklungsenden der Erregerspule von dem Wickelraum des Spulenkörpers entfernbar und dann mit den kontaktierten Wicklungsenden in ihrer Gebrauchsstellung an beiden Stirnflanschen festlegbar ist, **dadurch gekennzeichnet,** daß die äußeren Stiftenden (71 bzw.81 bzw.91) der Anschlußstifte (7 bzw.8 bzw.9) gegenüber den inneren Stiftenden (72 bzw.82 bzw.92) durch ein abwinkelndes Zwischenstück (73 bzw.83 bzw.93) gegeneinander versetzt angeordnet und mit dem Zwischenstück derart in die Anschlußplatte (4 bzw.5 bzw.6) eingespritzt sind, daß die äußeren Stiftenden mit möglichst dichtem gegenseitigem Abstand vorzugsweise in Reihe und die inneren Stiftenden mit möglichst großem gegenseitigem Abstand vorzugsweise nicht fluchtend zueinander gehalten sind.

2. Spulenkörper nach Anspruch 1, **dadurch gekennzeichnet,** daß die Anschlußplatte (4) über ein Filmscharnier (45) an einem Stirnflansch (11) einstückig derart angeformt ist, daß sie zur Kontaktierung mit den Wicklungsenden der Erregerspule von dem Wickelraum in ihre Wickelstellung seitlich wegschwenkbar und dann mit den kontaktierten Wicklungsenden auf den anderen Stirnflansch (12) in ihre Gebrauchsstellung zuschwenkbar und an diesem festrastbar ist. (FIG 1-7)

3. Spulenkörper nach Anspruch 2, **dadurch gekennzeichnet,** daß in der Nähe der scharnierartigen Befestigung an der Anschlußplatte (4) Abspannhaken (44,44) für die zu den inneren Stiftenden (72 bzw.82 bzw.92) führenden Wicklungsenden der Erregerspule im Sinne einer schlaufenfreien Wicklungsendenbewegung beim Schwenken der Anschlußplatte (4) in ihre Gebrauchsstellung vorgesehen sind.

4. Spulenkörper nach Anspruch 1, **dadurch gekennzeichnet,** daß die Anschlußplatte (5 bzw.6) als getrenntes Bauteil derart ausgebildet ist, daß sie zur Kontaktierung mit den Wicklungsenden der Erregerspule neben dem Wickelraum seitlich positionierbar und dann mit den kontaktierten Wicklungsenden in ihre Gebrauchsstellung über den Wickelraum legbar und an beiden Stirnflanschen (21,22 bzw.31,32) festrastbar ist. (FIG 9-11)

5. Spulenkörper nach Anspruch 1, **dadurch gekennzeichnet,** daß die Anschlußplatte (5 bzw.6) als getrenntes Bauteil derart ausgebildet ist, daß sie zur Kontaktierung mit den Wicklungsenden der Erregerspule neben dem Wickelraum seitlich positionierbar und dann mit den kontaktierten Wicklungsenden in ihre Gebrauchsstellung über den Wickelraum legbar und an beiden Stirnflanschen (21,22 bzw.31,32) festschweißbar ist.

6. Spulenkörper nach Anspruch 1, **dadurch gekennzeichnet,** daß die Anschlußplatte (5 bzw.6) als getrenntes Bauteil derart ausgebildet ist, daß sie zur Kontaktierung mit den Wicklungsenden der Erregerspule neben dem Wickelraum seitlich positionierbar und dann mit den kontaktierten Wicklungsenden in ihre Gebrauchsstellung über den Wickelraum legbar und an beiden Stirnflanschen (21,22 bzw.31,32) festklebbar ist.

7. Spulenkörper nach einem der Ansprüche 1 bis 6, **dadurch gekennzeichnet,** daß die äußeren Stiftenden (71 bzw.81 bzw.91) im Rastermaß eines handelsüblichen Miniatur-Anschlußsteckers angeordnet sind.

8. Spulenkörper nach einem der Ansprüche 1 bis 7, **dadurch gekennzeichnet,** daß die äußeren Stiftenden (71 bzw.81 bzw.91) innerhalb einer an die Anschlußplatte (4 bzw.5 bzw.6) angeformten Steckerwanne (45) angeordnet sind, mittels der ein äußerer Anschlußstecker relativ zu den äußeren Stiftenden führbar und/oder in Betriebskontaktstellung fixierbar ist.

9. Spulenkörper nach einem der Ansprüche 1 bis 8, **dadurch gekennzeichnet,** daß in Wickelstellung der Anschlußplatte die äußeren Stiftenden (71 bzw.81 bzw.91) und die inneren Stiftenden (72 bzw.82 bzw.92) senkrecht zur Spulenachsrichtung und in Gebrauchsstellung der Anschlußplatte in Gegenrichtung zur Wickelstellung ebenfalls senkrecht zur Spulenachsrichtung aus der Anschlußplatte herausragen. (FIG 1-4)

10. Spulenkörper nach einem der Ansprüche 1 bis 8, **dadurch gekennzeichnet,** daß in Wickelstellung der Anschlußplatte die äußeren Stiftenden (71 bzw.81 bzw.91) in Spulenachsrichtung sowie die inneren Stiftenden (72 bzw.82 bzw.92) senkrecht zur Spulenachsrichtung und in Gebrauchsstellung der Anschlußplatte die äußeren Stiftenden (71 bzw.81 bzw.91) in Gegenrichtung zur Wickelstellung parallel zur Spulenachsrichtung sowie die inneren Stiftenden (72 bzw.82 bzw.92) in Gegenrichtung zur Wickelstellung senkrecht zur Spulenachsrichtung aus der Anschlußplatte herausragen. (FIG 5-8)

11. Spulenkörper nach Anspruch 10, **dadurch gekennzeichnet,** daß die Anschlußplatte mit Stützrippen (43) zur Ableitung des Steckerdruckes in den der Steckrichtung abgewandten Stirnflansch (11) versehen ist. (FIG 1-4)

12. Spulenkörper nach einem der Ansprüche 1 bis 11, **dadurch gekennzeichnet,** daß die Anschlußplatte mit radialen, in Spulenachsrichtung verlaufenden taschenförmigen Unterlegkanten (49) versehen ist, in die die Seitenwandungen eines randoffenen Schlitzes eines Motorgehäuses (10) eingreifen, in den der bewickelte und kontaktierte Spulenkörper einschiebbar ist. (FIG 12)

13. Spulenkörper nach einem der Ansprüche 1 bis 12, **dadurch gekennzeichnet,** daß die äußeren und die inneren Stiftenden sowie das abwinkelnde Zwischenstück Teile eines einstückigen Runddrahtes sind.

14. Spulenkörper nach einem der Ansprüche 1 bis 12, **dadurch gekennzeichnet,** daß die äußeren und die inneren Stiftenden sowie das Zwischenstück Teile eines einstückigen Vierkantdrahtes sind.

15. Spulenkörper nach einem der Ansprüche 1 bis 12, **dadurch gekennzeichnet,** daß die äußeren und die inneren Stiftenden sowie das abwinkelnde Zwischenstück Teile eines einstückigen Stanz- bzw. Stanzbiege-Blechteils sind.

16. Spulenkörper nach einem der Ansprüche 1 bis 15, **dadurch gekennzeichnet,** daß die äußeren Stiftenden (71 bzw.81 bzw.91) mit keilförmigen Anschrägungen (811) versehen sind.

87 P 3324

FIG 3

FIG 2

FIG 4

FIG 1

FIG 8

FIG 7

FIG 5

FIG 6

87 P 3324

81  91
52  71  5
52

51  45  51

**FIG 9**

221  221
2
211  211  22
21

**FIG 10**

321  91  81  321
71  32
311  6  3
311
45
31

**FIG 11**

81  91
71  45
49  49
10

**FIG 12**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | EP-A-0 178 456 (SIEMENS) * Spalte 2, Zeile 17 - Spalte 3, Zeile 9 * --- | 1,2 | H 01 F 5/04 H 02 K 3/52 H 02 K 5/22 |
| A | DE-A-1 955 165 (LICENTIA) * Seiten 3-5 * --- | 4,7,8 | |
| A | DE-A-3 244 628 (SIEMENS) * Figuren 1-6 * --- | 13,14, 16 | |
| A | FR-A-2 511 135 (ASPERA SPA) --- | | |
| A | DE-A-3 026 761 (BSO STEUERUNGSTECHNIK) --- | | |
| A | DE-A-1 538 884 (LICENTIA) --- | | |
| A | FR-A-1 302 317 (R. BOSCH) ----- | | |

RECHERCHIERTE SACHGEBIETE (Int. Cl.4)

H 01 F 5/00
H 02 K 3/00
H 02 K 5/00
H 01 F 15/00
H 01 F 41/00

Der vorliegende Recherchenbericht wurde für alle Patentansprüche erstellt

| Recherchenort | Abschlußdatum der Recherche | Prüfer |
|---|---|---|
| DEN HAAG | 14-12-1988 | VANHULLE R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)